# FASCICULE DE BREVET EUROPEEN

(11) **EP 1 280 986 B1**
(45) Date de publication et mention de la délivrance du brevet: **07.11.2007**
(21) Numéro de dépôt: 01915464.0
(22) Date de dépôt: 14.03.2001
(51) Int. Cl.: F02B 53/04, F01C 1/22

(54) **MOTEUR ENERGETIQUE A POLY INDUCTION**
BRENNKRAFTMASCHINE MIT MEHRFACHER INDUKTION
MULTIPLE INDUCTION ENERGY-DRIVEN ENGINE

(30) Priorité: 15.03.2000 CA 2302870
(43) Date de publication de la demande: 05.02.2003
(73) Titulaire: Nivesh SA, 2012 Luxembourg (LU)
(72) Inventeur: BEAUDOIN, Normand, 92150 Suresnes (FR)
(74) Mandataire: Peuscet, Jacques
(86) Numéro de dépôt international: PCT/FR2001/000753
(87) Numéro de publication internationale: WO 2001/069061

(56) Documents cités:
- DE-A- 2 721 641
- DE-A- 3 244 683
- DE-A- 3 527 227
- US-A- 3 913 408
- US-A- 4 551 073
- US-A- 4 656 984
- US-A- 5 322 425

## Description

Lorsque l'on regarde attentivement l'idéation des moteurs conventionnels, qu'ils soient de type à piston cylindrique ou encore de type rotatif, l'on s'aperçoit que les concepteurs, de même que les utilisateurs de ceux-ci ont visé leur réalisation par des conceptions visant les structures les plus simples, laissant aux transmissions et aux différentiels les parties les plus complexes de la transmission d'énergie, par exemple vers les roues. Nous avons d'ailleurs recherché la même simplicité dans l'invention du déposant pour "Machine énergétique III", objet du brevet canadien N° 1, 229,749, déposé le 18 mars 1985 sous le numéro 476,720, et délivré le 1er décembre 1987.

La présente invention a pour but de montrer les lacunes d'une telle pensée en ce qui tient à la dépense d'énergie. En effet, des moteurs à induction unique réduisent considérablement les possibilités de formes de mouvement des pièces qui seront, dans les moteurs à combustion interne, appelées à produire des compression et dilatation des gaz, qui engendrent les explosions et la dynamique des moteurs.

Nous présenterons donc, dans les pages qui vont suivre, un ensemble de figures ovales, en huit, triangulaires, rectilignes et autres, que produiront les pièces en mouvement de moteurs à poly induction.

Commençons par mentionner que les moteurs conventionnels, principalement les moteurs à piston et les moteurs rotatifs, sont des exemples de cette tendance à pousser la conception vers la simplification limite. Ces moteurs sont actionnés dynamiquement par une seule pièce, soit le vilebrequin pour les moteurs à piston, et le vilebrequin avec excentrique pour les moteurs rotatifs. Le mouvement des pièces est, pour le reste, des plus statique: dans le moteur conventionnel, le piston inséré dans le cylindre suit une trajectoire rectiligne, alors que dans le moteur rotatif, puisque le piston triangulaire est soumis à la fois à son ancrage au côté du moteur, le mouvement devient quasi elliptique.

Dans les deux cas, les figures géométriques primaires obtenues ont pour résultat une production de puissance assez peu rentable puisque le couple, au moment de l'explosion du moteur et dans les fractions de secondes successives qui suivent, est assez réduit par rapport à l'énergie qu'il consomme.

De même en est-il pour notre invention pour "Machine énergétique III", citée précédemment: nous avons opté pour la simplicité. Dans le cas plus particulier de l'une de ses réalisations, une pale insérée de façon coulissante dans une pièce rotative imbriquée rotativement et de façon décentrée dans un corps de moteur, de telle manière que les extrémités touchent toujours à la cage semi-cylindrique qui sert de chambre d'admission et d'explosion, et par conséquent de cylindre de la machine. Mais cette mécanique, bien qu'elle ait eu l'avantage d'améliorer le couple du moteur, en plus de permettre d'y retirer les valves conventionnelles, avait la lacune de produire une trop grande friction et par conséquent une usure trop considérable entre les pièces, principalement entre les segments et la paroi des chambres à combustion, et ensuite, entre la pale et le moyeu rotatif dans lequel elle était insérée de façon coulissante.

C'est pour résoudre l'ensemble de ces problèmes et avec l'idée qu'il serait très certainement rentable d'accepter un plus grand nombre de pièces pour former le mouvement du moteur, que nous avons avancé l'idée de moteur à poly induction. En effet, nous pensons que cette manière de faire est susceptible d'offrir un mouvement des pièces qui soit plus original et plus susceptible d'augmenter le couple en annihilant les surfaces de frictions indues. Ainsi donc, si la puissance par explosion est augmentée, et que les systèmes de valves sont simplifiés, il est à penser que, tout compte fait, c'est au contraire d'un moins grand nombre de pièces servant à l'explosion, que l'on aura besoin pour obtenir la même puissance de moteur. Par voie de conséquence, contrairement à l'hypothèse de départ, le total des pièces nécessaires à la construction d'un moteur de même puissance, sera inférieur pour un moteur à poly induction, à celui des moteurs conventionnels. Il en découle de plus que les dimensions du moteur seront aussi inférieures.

Des moteurs à poly induction ont déjà été proposés et sont décrits dans les demandes de brevet publiées sous les numéros DE 27 21 641 A1 et DE 35 27 227 A1.

Notre raisonnement a donc été amorcé en nous demandant quelle pouvait bien être la mécanique par laquelle nous pouvions supporter les pièces du moteur énergétique, afin d'en annihiler les frictions.

Nous avons débuté notre raisonnement en étudiant plus précisément le mouvement des extrémités de la pale et en ayant pour objectif, si nous arrivions à la produire mécaniquement, de relier cette mécanique à chacune des extrémités. En étudiant le mouvement de ces extrémités l'une par rapport à l'autre, nous avons tout d'abord remarqué que leur mouvement subit deux phases opposées l'une à l'autre, soit une phase d'accélération et une phase de décélération. Par conséquent, lorsqu'une extrémité entre dans sa phase de décélération, par compensation, l'autre entre dans sa phase d'accélération.

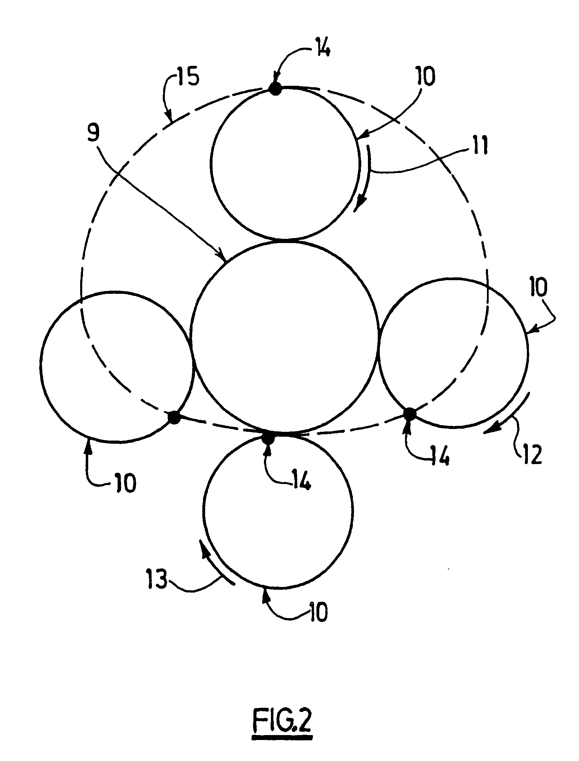

Nous avons donc eu l'idée géométrique suivante que si l'on fait pivoter rotativement une circonférence autour d'une autre de même dimension, et que l'on suit le mouvement d'un point fixe de cette première circonférence à travers un tour complet de rotation et par conséquent de pivotement, alors ce point décrira très exactement la forme recherchée, à savoir la forme parcourue par l'extrémité de la pale (FIG. 2).

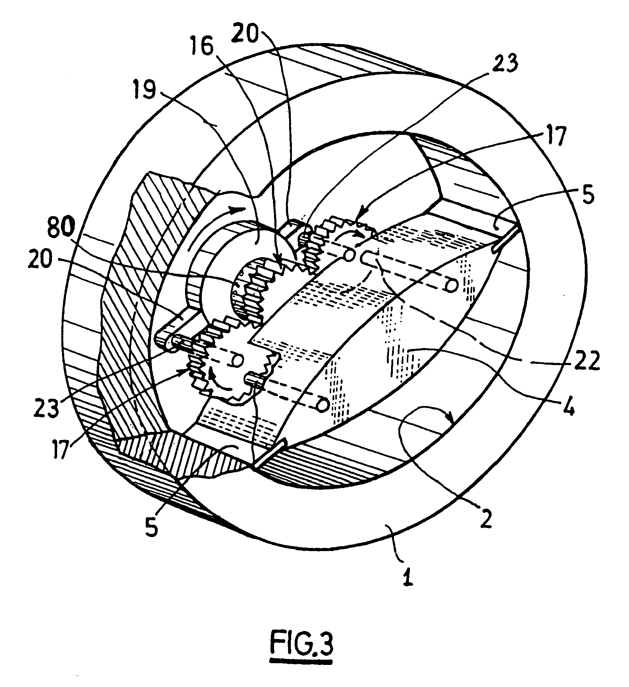

D'un point de vue mécanique, nous avons supposé que ces circonférences seraient matérialisées par des engrenages. Comme le mouvement décrit ci- dessus est celui de l'une des extrémités de la pale, qui en a bien entendu deux, deux circonférences rotatives seront nécessaires sous forme d'engrenage. Ainsi donc, nous pouvons proposer une première réalisation de l'invention (FIG. 3) en imaginant que deux engrenages, remplaçant les circonférences pivotantes - et que nous appellerons engrenages d'induction - sont montés rotativement à chaque extrémité d'une pièce pivotante - que nous nommerons support d'induction - cette pièce étant montée rotativement dans le corps du moteur. Les deux engrenages d'induction, de même dimension, sont par la suite imbriqués à un engrenage - lui aussi de même dimension, que nous appellerons engrenage de support - qui est relié rigidement au centre du moteur. Dès lors, si l'on relie chaque extrémité de la pale à des points d'ancrage situés sur le diamètre des engrenages d'induction, l'on s'aperçoit que la pale décrit, très exactement, le mouvement que nous en attendions, que par conséquent, toutes les frictions indues sont annihilées et qu'il n'est plus nécessaire qu'elle soit imbriquée dans un noyau, comme cela avait été préalablement nécessaire.

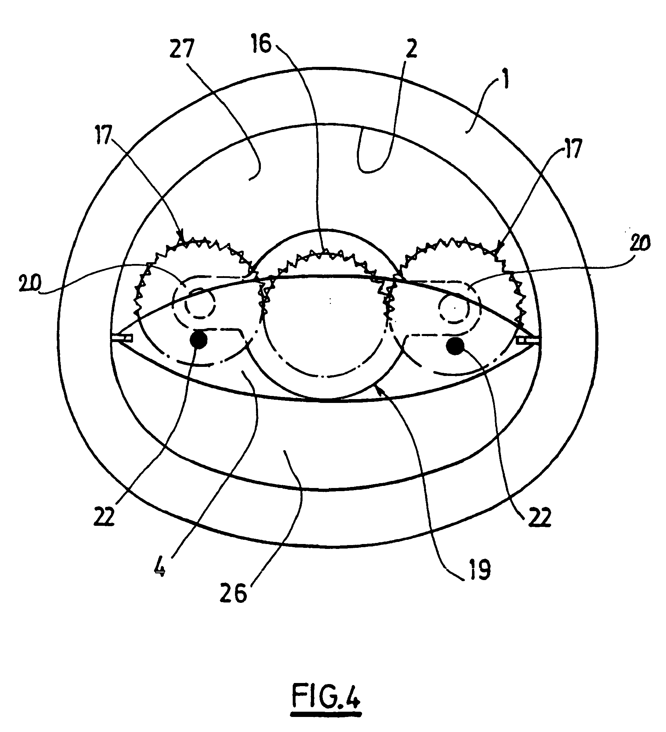

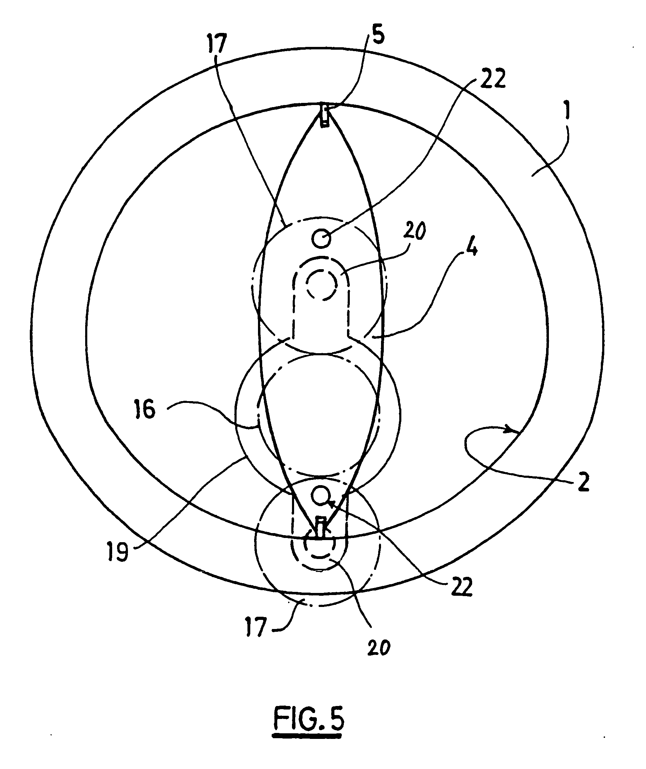

Dans les deux figures 4 et 5, nous montrons successivement la pale dans sa phase d'explosion et d'expansion. Dans un premier temps, on peut remarquer comment les deux points de liaison des engrenages se trouvent en même temps à leur point le plus bas. A cette position, la chambre de combustion est réduite à son maximum et les gaz sont prêts à exploser, alors que de l'autre côté de la pale, la chambre d'admission est augmentée à son maximum (Figure 5). Ensuite, nous montrons la disposition de ces pièces, un quart de tour plus en avant, alors que les points de liaison sont tous deux à leur plus haut. Nous avons ensuite vérifié si cette façon de faire n'était qu'une variante d'une idée plus générale. C'est pourquoi nous avons tout d'abord voulu montrer les variantes de cette idée avant d'en montrer d'autres particularités.

Ainsi donc, alors que dans la première réalisation, non seulement les engrenages d'induction étaient de la même grandeur entre eux, mais aussi étaient-ils, on s'en rappellera, de la même grandeur que l'engrenage de support. Dans les réalisations subséquentes, les grandeurs des engrenages d'induction seront différentes de celles des engrenages de support.

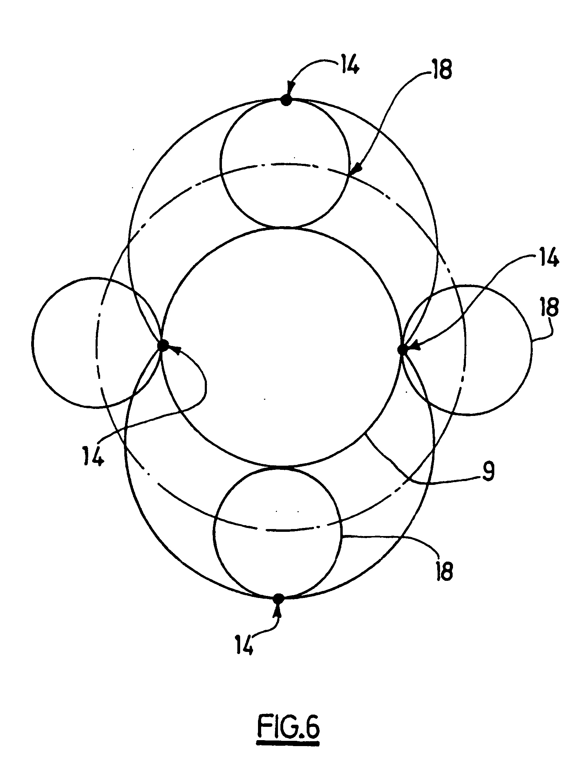

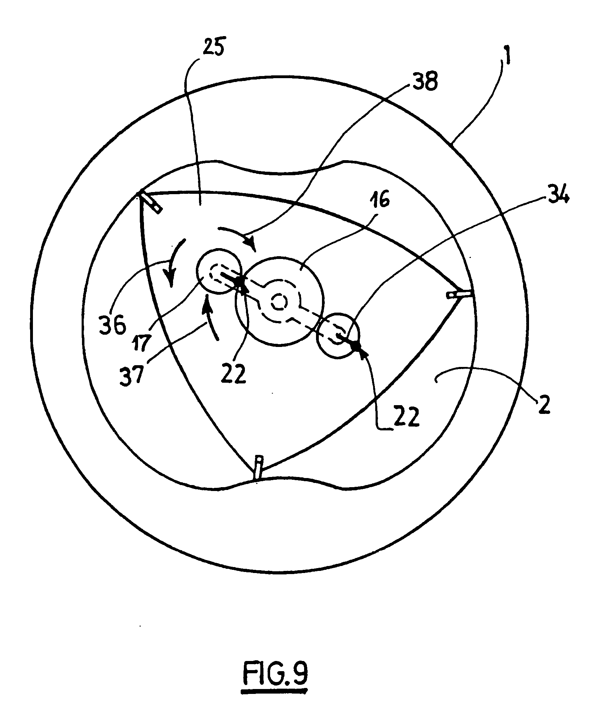

Une deuxième figure est donnée si on suppose des engrenages d'induction ayant une dimension deux fois plus petite que celle de l'engrenage de support. Dans ce cas, la figure produite par un point situé sur l'engrenage d'induction a la forme d'un huit (FIG. 6). Dès lors, si on relie chacun des engrenages d'induction à une même pièce de type triangulaire, on obtient un moteur dont le mouvement, similaire à celui d'un moteur rotatif, est cependant produit d'une toute autre manière et de façon beaucoup plus rentable. En effet, comme nous le montrerons plus abondamment dans la description détaillée des figures, la remontée des pièces produit ce que l'on pourrait appeler une contradiction mécanique, une sorte de blocage qui empêche systématiquement les pièces de redescendre vers l'arrière. Lors de l'explosion donc, la poussée sur l'un des côtés du triangle n'est pas en partie annulée par l'autre partie de ce côté, puisque c'est le blocage mécanique qui fait le travail. Au lieu de ne bénéficier comme résultante, que d'un tiers de la poussée, c'est plutôt du double, à savoir des deux tiers que l'on dispose (FIG. 9).

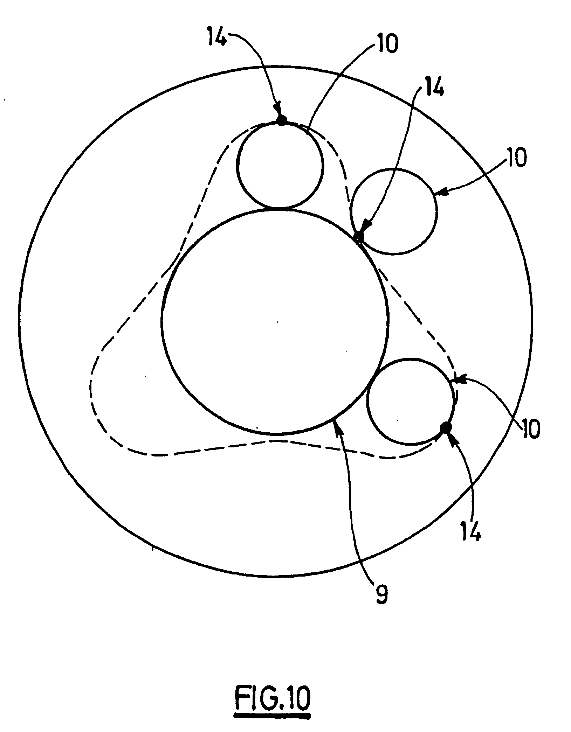

Une troisième variante de l'invention est obtenue lorsqu'on établit un rapport de un sur trois entre la grosseur des engrenages d'induction et celle de l'engrenage de support. La forme obtenue est semi-triangulaire (FIG. 10) et une pale est rattachée aux engrenages d'induction: dans ce cas, la forme du moteur obtenue a l'apparence d'un trèfle.

Des formes subséquentes peuvent être obtenues, selon que les engrenages sont dans un rapport de un sur quatre, cinq, etc... A l'inverse, dans le cas où il n'y a qu'un seul engrenage, la forme du mouvement est ovale et un piston conventionnel peut lui être rattaché.

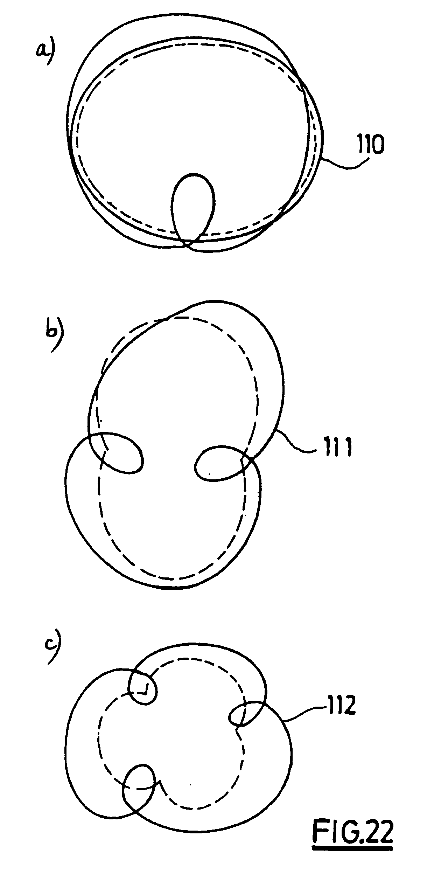

Dans chaque figure produite, on peut provoquer des mouvements concaves ou convexes, selon qu'on rattache les pistons pales, ou pistons triangulaires, à l'intérieur ou à l'extérieur des circonférences, tel que nous le montrons dans la figure 15.

De même, si l'ajustement des points de rattachement des pales aux engrenages de support n'est pas correspondant, on s'apercevra que la distance entre ce point variera en oscillant tout au long du mouvement. Cette manière de faire pourrait rendre rentable l'utilisation d'un piston flexible.

Jusqu'ici, nous avons généralisé une partie de l'invention en montrant la notion de poly induction à partir de l'utilisation d'engrenages externes.

Des formes intéressantes peuvent être obtenues en utilisant maintenant - par opposition à seulement des engrenages de type externes, tel que nous l'avons fait précédemment - des jeux d'engrenages de type externes et internes.

Dans ces cas, il s'agira plutôt d'imbriquer les engrenages d'induction de type externe, à l'engrenage de support de type interne.

Parmi les figures intéressantes créées, notons celle du moteur triangulaire. On peut supposer en effet, deux engrenages d'induction identiques rattachés, comme dans le premier cas rotativement à un support rotatif, lesdits engrenages étant plus petits - dans un rapport de un sur trois - qu'un engrenage de support interne auquel ils sont imbriqués. Une pale est ensuite rattachée à des points d'ancrage des engrenages d'induction. On pourra constater dès lors, que cette pale décrit un mouvement de telle manière que les extrémités peuvent à tout moment suivre les parois d'un cylindre triangulaire dans lequel elle se déplace, et cela, en augmentant et diminuant tour à tour les chambres de combustion et d'admission.

Cette manière de faire pourrait très certainement être à l'origine de ce que nous serions tentés d'appeler des moteurs à trois temps où un temps supplémentaire serait inséré entre les deux temps des moteurs à deux temps. Il s'agirait d'un temps d'intégration d'air qui chasserait les gaz brûlés, lesquels seraient ensuite remplacés par des gaz neufs. Ainsi donc, jamais de vieux gaz ne se retrouveraient à nouveau dans les chambres à combustion, de même qu'aucun gaz neuf ne serait évacué lors de l'échappement.

Il nous reste maintenant à traiter d'un dernier point qui est celui de l'induction de la puissance vers l'extérieur du moteur.

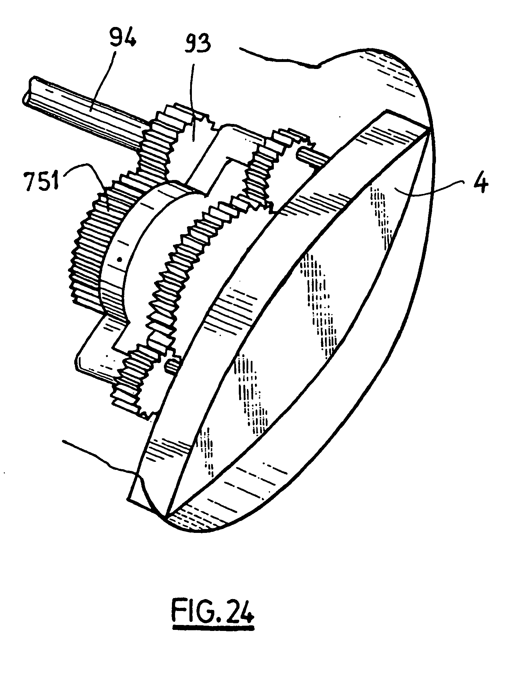

Celle-ci peut tout d'abord, bien entendu, être induite par le vilebrequin. Ensuite, elle peut être induite par l'axe de support, qui n'a pas la même vitesse que le vilebrequin ou encore que la pale (FIG. 17). Un engrenage peut en effet être relié rigidement à l'axe de support, et il peut être imbriqué à cet axe un axe de sortie acheminant la puissance à l'extérieur de la machine.

Dernièrement, puisque la pale, ou le piston, a un effet oscillant, ils peuvent se voir disposer rigidement, dans le côté, un engrenage interne qui sera couplé à un engrenage externe fixé rigidement à un axe. Ce sera dès lors, cet axe qui acheminera l'énergie vers l'extérieur.

### DESCRIPTION SOMMAIRE DES FIGURES

La figure 1 est une reproduction de la figure VI de l'invention du déposant pour "Machine énergétique III", objet du brevet canadien N° 1, 229,749, déposé le 18 mars 1985 sous le numéro 476,720, et délivré le 1 e. décembre 1987.
   On peut y voir les principaux points de friction qui ont amené le déposant à concevoir des mécaniques de soutien annihilant lesdits points de friction.
La figure 2 représente un schéma de deux circonférences, la première étant fixe et la seconde en rotation autour de la première. Avec cette figure, on peut constater géométriquement le cheminement que parcourra, à travers la rotation de la deuxième circonférence, un point situé sur cette dernière. Le trajet effectué par ce point produira une forme quasi circulaire, correspondant exactement à ce que recherchait le déposant, à savoir être similaire au trajet que parcourent les extrémités de la pale.
La figure 3 représente un moteur dont la mécanique est la matérialisation de la géométrie précédemment exposée à la Figure 2. Ici, les circonférences sont remplacées par des engrenages. En effet, deux engrenages d'induction sont imbriqués rotativement sur un engrenage de support rattaché rigidement au moteur. Ces deux engrenages d'induction sont tenus par un support monté rotativement dans le côté du moteur. La pale est rattachée par un moyen à ces engrenages d'induction. Il s'en suit qu'elle décrit ainsi le mouvement quasi- circulaire recherché. Dans cette figure, les pièces sont situées en cours d'admission et d'expansion.
La figure 4 représente une coupe transversale d'un moteur similaire à celui de la Figure 3, mais dont les pièces sont dans la phase de l'explosion et à la fin de l'admission.
La figure 5 est une vue similaire à la précédente, mais dont les pièces ont été placées en position de demi-trajet entre deux pistons.
La figure 6 représente une forme géométrique d'une réalisation de poly induction, où les circonférences d'induction sont deux fois plus petites que celle de soutien. La forme décrite par un point situé sur ces circonférences en rotation pivotante, est similaire à celle d'un huit.
La figure 7 est une matérialisation de la géométrie de la Figure 5. Ici, on pourra remarquer que la pale est remplacée par un piston de forme triangulaire. Chaque pointe du triangle adhère à tout moment à la surface du cylindre ayant la forme d'un huit. On remarquera que, même si le piston est triangulaire, on peut produire le moteur à double soutien. Le résultat en est que l'axe de soutien auquel est rattaché rigidement le piston ne sera pas dans une position similaire lors de chacune des explosions. Ici, l'axe de soutien est bien centré avec la surface d'explosion, lors de l'explosion.
La figure 8 représente un moteur similaire à celui montré à la figure précédente, mais lors d'une explosion subséquente, on y remarque que l'axe de soutien est dans une position différente permettant à chaque engrenage d'être en même temps, à son maximum d'élévation.
La figure 9 représente un moteur similaire à celui des deux figures précédentes, mais où les pièces ont été placées en phase d'expansion.
La figure 10 représente une forme géométrique obtenue par des circonférences d'induction, cette fois-ci, trois fois plus petites que celles du support. La forme du mouvement obtenu sera alors similaire à celle d'un trèfle.
La figure 11 est la matérialisation d'un moteur dont le cylindre a une forme similaire à celle obtenue dans la figure précédente. La pale est ici en position d'explosion et de fin d'admission.
   La deuxième partie des figures implique des réalisations de moteurs à poly induction, mais cette fois-ci obtenues non seulement par des engrenages externes, mais impliquant aussi des engrenages internes.
La figure 12 montre le mouvement d'un point situé sur une circonférence d'induction tournant à l'intérieur d'une circonférence. Ici, la circonférence intérieure est trois fois plus petite.
La figure 13 montre la matérialisation de la géométrie expliquée à la figure précédente, et qui aboutit à la construction d'un moteur triangulaire. Celui-ci a été placé en phase d'explosion et de fin d'admission.
La figure 14 est une reprise de la figure précédente, mais où le moteur est en phase d'expansion.
La figure 15 représente des formes concaves obtenues selon que l'on situe le point de rattachement des pales aux engrenages d'induction, à l'intérieur des lignes de circonférences.
La figure 16 représente des formes convexes obtenues en plaçant le point de rattachement des pales, à l'extérieur des circonférences des engrenages d'induction.
La figure 17 montre un moteur dont l'induction, vers l'extérieur, est obtenue à partir d'un axe imbriqué à l'axe de support.

### DESCRIPTION DÉTAILLÉE DES FIGURES

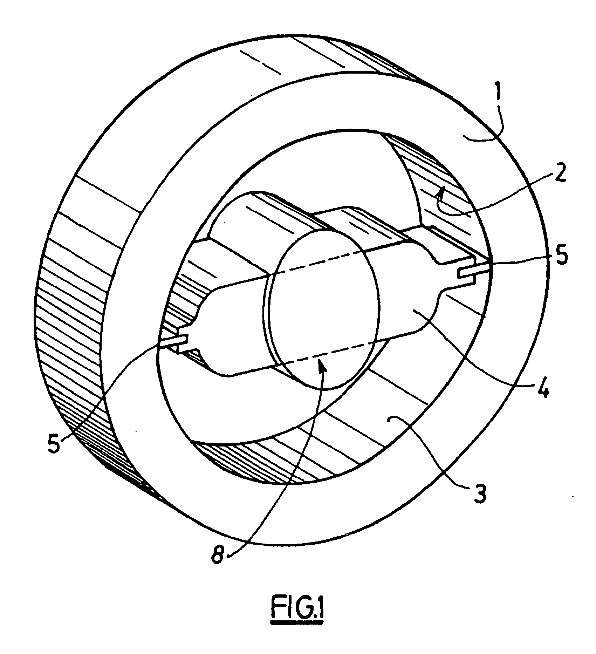

La figure 1 est une reproduction de la figure VI de l'invention du déposant pour "Machine énergétique III", objet du brevet canadien N° 1, 229,749, déposé le 18 mars 1985 sous le numéro 476,720, et délivré le 1er décembre 1987.

On peut y apercevoir les principales composantes, soit: le bloc du moteur 1, le cylindre 2 du moteur, le noyau rotatif 8 disposé rotativement dans le cylindre 2, la pale 4 insérée de façon coulissante dans le noyau 8 et les segments 5 insérés de façon flottante à chaque extrémité de la pale 4. On peut constater que les principaux points de friction se situent entre les segments 5 et le corps du cylindre 2, puisque la sortie d'une extrémité de la pale 4 est actionnée par la poussée de l'autre extrémité contre la surface 3 du cylindre 2. Un deuxième point de friction est la partie se situant entre la pale 4 et le noyau 8. La poussée des gaz sur la pale 4 établit une force en sens contraire de celle de la résistance d'un vilebrequin auquel est rattaché le noyau central 8, d'où cette friction.

La figure 2 représente deux circonférences de même grandeur - que nous nommerons circonférence fixe 9 et circonférence rotative 10. On peut apercevoir le pivotement de cette circonférence rotative 10 à trois étapes différentes (voir flèches 11, 12, 13). En supposant un point fixe 14 de cette circonférence rotative 10, on peut tracer, à travers le déplacement de celle-ci, le trajet qu'aura fait ce point après une rotation complète autour de la circonférence de soutien 9. On obtient alors une forme quasi circulaire, qui correspond à la forme recherchée.

La figure 3 représente une vue diagonale d'une machine à poly induction, dont la mécanique est une matérialisation de la géométrie exposée à la figure précédente. Ici, les circonférences fixe et rotative ont été remplacées par des engrenages que nous nommerons respectivement engrenage de soutien 16 et engrenages d'induction 17. Plus précisément, un engrenage de soutien 16 sera relié rigidement au corps du moteur 1 indirectement par le rattachement à un axe fixe 80. Autour de cet axe fixe 80, entre le côté du moteur et l'engrenage de soutien 16, sera monté un moyen pour soutenir les engrenages d'induction 17 et que l'on nommera vilebrequin de support 19. Chaque extrémité de ce vilebrequin de support 19 sera pourvu d'un maneton de support 20, et ce dernier sera muni d'un moyen, tel un axe 23 auquel sera relié rotativement l'engrenage d'induction 17. Les engrenages d'induction 17 montés rotativement aux extrémités de chaque maneton 20 le seront de telle sorte qu'ils seront à la fois imbriqués à l'engrenage de soutien 16; par conséquent, lors de la rotation du vilebrequin de support 19, ils seront entraînés à pivoter sur eux-mêmes (voir flèche). Chacun de ces engrenages d'induction 17 sera muni à son tour d'un moyen tel un axe d'induction 22, le rattachant de façon semi-rotative à la pale 4. Dès lors, la pale 4 sera entraînée dans le cylindre 2, et sera supportée à tout moment, de telle sorte que les segments 5, insérés à chaque extrémité de la pale 4 pourront être flottants, et marier sans frictions indues les parois du cylindre 2 de la machine ou du moteur.

La figure 4 représente une coupe transversale d'un moteur similaire à celui de la Figure 3, et dont les pièces ont été placées, dépendamment du côté de la pale où l'on se situe, soit dans la phase explosive, soit dans la phase de fin d'admission. De façon plus précise, on pourra voir à cette figure, que dans le corps de la machine 1 est disposée une chambre cylindrique. Deux engrenages d'induction 17 sont montés rotativement aux extrémités de manetons de soutien 20 et sont imbriqués à l'engrenage de soutien 16. Chaque partie de la pale 4 est rattachée à un axe d'induction 22 situé sur les engrenages d'induction 17. Dans la présente figure, les deux axes d'induction 22 arrivent en même temps dans la partie la plus basse de leur trajectoire, et par conséquent la pale 4 se retrouve dans une position horizontale, la chambre des gaz 26 étant réduite à son minimum, ce qui permet l'explosion. Par contre, de l'autre côté de la pale 4, c'est le contraire qui se produit, puisque la chambre d'admission 27 est étendue à son maximum, ce qui signifie que c'est la fin de l'admission des gaz.

La figure 5 est une figure similaire à celle de la Figure 4, mais où les pièces sont à mi-chemin entre deux positions. On remarquera que, contrairement à la figure précédente, les axes d'induction 22 sont tous deux à leur plus haut niveau simultanément, et cela en même temps que la pale 4 se trouve en position perpendiculaire.

La figure 6 représente une forme géométrique préalable à une réalisation de poly induction, où les circonférences d'induction 18 sont deux fois plus petites que la circonférence de soutien 9. Comme pour les réalisations précédentes, on doit supposer que les circonférences d'induction 18 tournent en pivotant autour de la circonférence de soutien 9. La forme décrite par un point situé sur ces circonférences d'induction 18 est similaire à celle d'un huit.

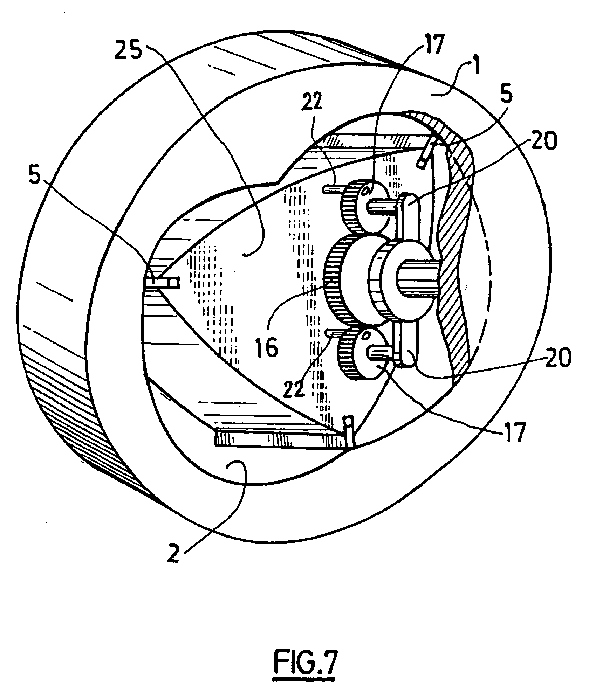

La figure 7 est une matérialisation de la géométrie de la Figure 5. Le moteur est montré du côté des engrenages pour mieux en visualiser le fonctionnement. Similairement aux réalisations précédentes, deux engrenages d'induction 17 sont montés rotativement aux extrémités d'un maneton 20 lui-même rotatif, de telle sorte qu'ils soient imbriqués simultanément à un engrenage de soutien 16. Des axes d'induction 22 sont reliés ici, plutôt à un piston de forme triangulaire 25 remplaçant la pale 4 des figures précédentes. Chaque extrémité de ce piston 25 sera munie de segments flottants 5 qui suivront à tout moment le déplacement du piston 25 et le cylindre 2 en forme de huit. On remarquera que même si le piston 25 est triangulaire, on peut produire le moteur à double soutien. Il en résulte que l'axe de soutien auquel est rattaché rigidement le piston 25 ne sera pas dans une position similaire lors de chacune des explosions. Ici, l'axe de soutien est bien centré sur la surface d'explosion lors de l'explosion.

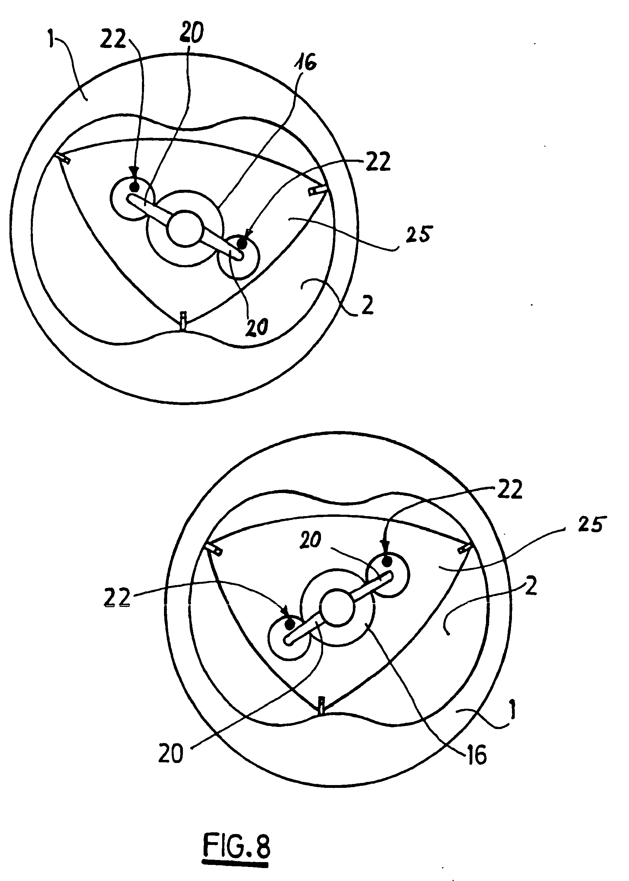

La figure 8 représente, figurativement, la position des pièces dans les deux explosions subséquentes. On remarquera que même si les manetons d'induction 20 ne sont pas à la verticale, les deux axes d'induction 22 sont, quant à eux, à leur plus haut niveau, ce qui permet, même de façon dissymétrique, que les deuxième et troisième faces du piston 25 triangulaire soient à leur plus haut point.

La figure 9 montre un moteur similaire aux deux figures précédentes, mais où les pièces ont été placées en phase d'expansion, c'est-à-dire entre deux explosions. On est à même de constater que les axes d'induction 22 sont dans leur position latérale, ce qui permet le couple du moteur. On remarquera de plus, ce qui est très important au niveau du couple, que l'anti-couple se trouvant normalement du côté contraire au déplacement des pièces, et qui est une poussée négative sur les pièces, est annihilé par la clé mécanique en barrure que produit la montée de l'engrenage d'induction 17 de gauche. En effet, les directions opposées du déplacement des pièces (voir flèches 36, 37, 38) forment une contradiction mécanique qui agit comme un anti-retour naturel du piston triangulaire 25. En effet, la partie gauche du piston 25 subissant de façon naturelle un blocage mécanique d'anti-retour ne nécessite plus, dès lors, les compensations de l'autre côté du couple. Le couple du moteur s'en trouve donc doublé, puisqu'il n'y a pas de dépense d'énergie nécessaire pour annuler le contre-couple.

La figure 10 représente une forme géométrique obtenue par des circonférences d'induction 10, cette fois-ci, trois fois plus petites que la circonférence de support 9. Dès lors, comme dans les mécaniques précédentes, en faisant pivoter la circonférence d'induction 10 autour de la circonférence de support 9, et en suivant un point 14 situé sur celle-ci, on peut réaliser une forme qui s'apparente à celle d'un trèfle (en pointillés) et peut être rentable dans une application de moteur.

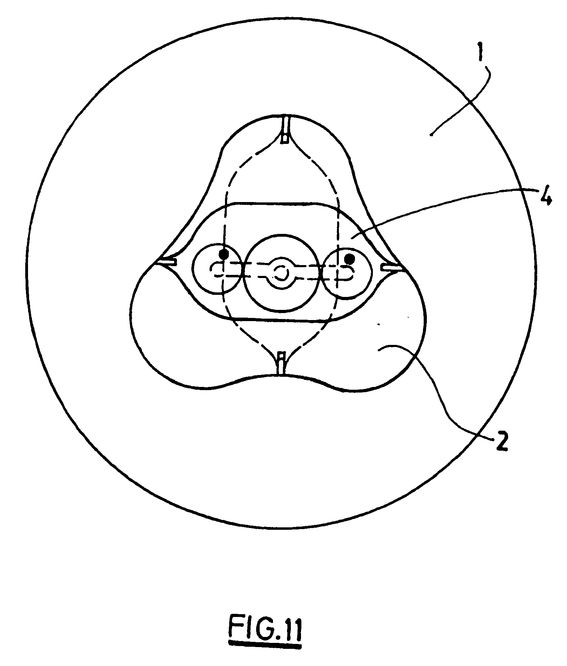

La figure 11 est la matérialisation d'un moteur dont le cylindre a une forme similaire à celle obtenue dans la figure précédente. La pale 4 est ici en position d'explosion et de fin d'admission puisque la partie située d'un côté de la pale 4 est réduite à son maximum alors qu'inversement, la partie contraire est vis-à-vis les parties du cylindre les plus élargies. Les pointillés, sur la figure, représentent les mouvements successifs de la pale 4.

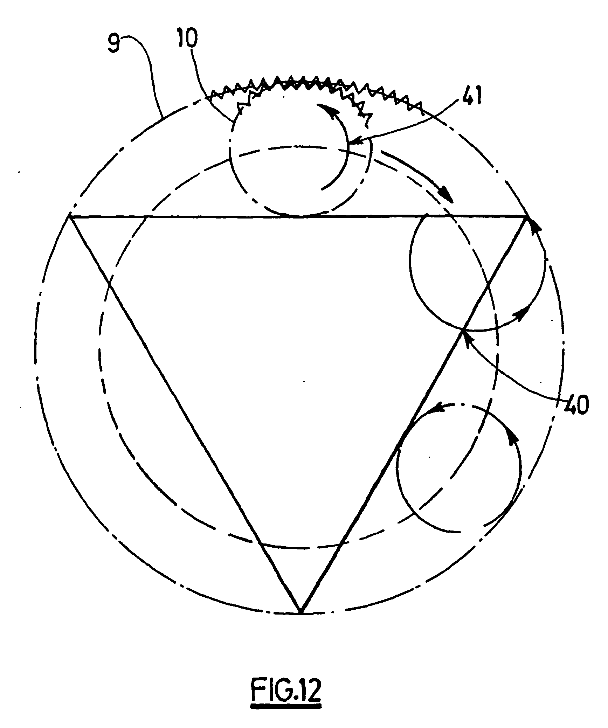

La figure 12 montre le mouvement d'un point situé sur une circonférence d'induction 10, mais cette fois, tournant à l'intérieur d'une circonférence de support 9. Ici, la circonférence située à l'intérieur - la circonférence d'induction 10- est trois fois plus petite que la circonférence de support 9. Le mouvement qui résultera d'un point choisi sur la circonférence située à l'intérieur - puisque c'est maintenant elle qui sera rotative - sera, après un tour complet c'est-à-dire trois rotations sur elle-même, similaire à la forme d'un triangle 40. Il est à noter que le mouvement de rotation de la circonférence intérieure 10 sera, puisqu'elle suit la circonférence de l'extérieur, en sens contraire de son pivotement (voir flèche 41).

Il est donc important de distinguer rotation et pivotement.

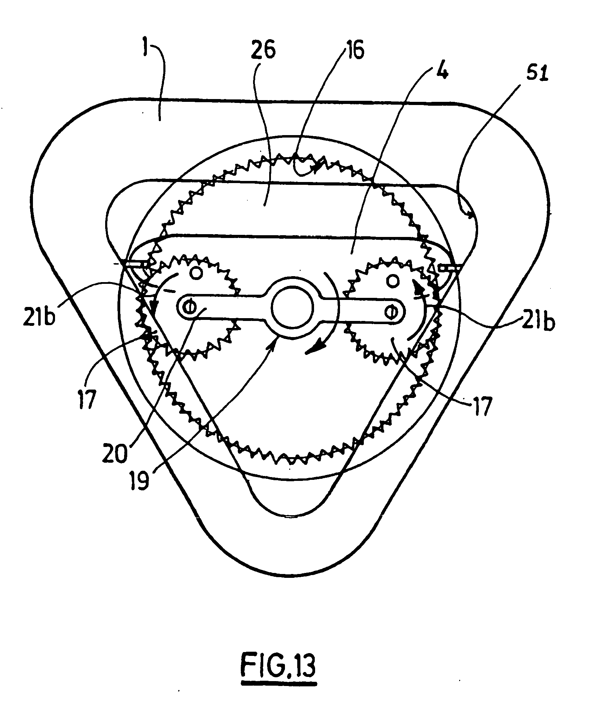

La figure 13 montre la matérialisation de la géométrie expliquée à la figure précédente et qui aboutit à la construction d'un moteur triangulaire. Celui-ci a été placé en phase d'explosion et de fin d'admission. Comme dans les réalisations précédentes, des manetons d'induction 20, rattachés à un vilebrequin 19 disposé rotativement (voir flèche) dans le côté du moteur, soutiennent à chaque extrémité des engrenages d'induction 17. Mais ici, cependant, au lieu d'être imbriqués sur un engrenage de soutien de type externe, ils sont plutôt imbriqués à un engrenage de soutien 16 de type engrenage interne, ce qui inverse le sens du pivotement (flèche 21 b). Ici, les pièces du moteur ont été placées dans leur phase explosive. Les chambres à combustion 26 se retrouvent donc entre le côté du cylindre triangulaire 51 et la pale 4, lorsque celle-ci se trouve parallèle à celui-ci.

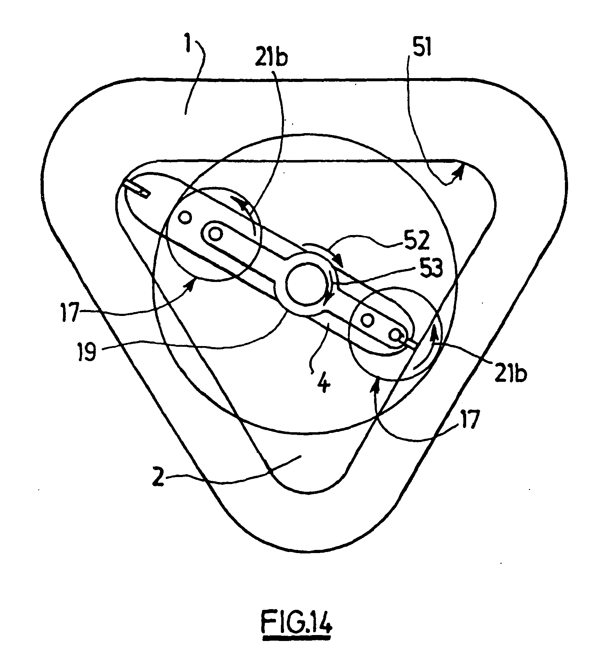

La figure 14 est une reprise de la figure précédente mais où le moteur est en phase d'expansion, ici, à mi-chemin entre deux explosions. On remarquera que les parties situées entre la pale 4 et le cylindre triangulaire 51, se sont agrandies sous la force de l'explosion. On notera que le sens de la rotation de la pale 4 (flèche 52) est similaire à celui du vilebrequin de soutien 19 (flèche 53).

La figure 15 représente des formes concaves obtenues 110, 111 et 112 selon que l'on situe le point de rattachement des pales aux engrenages d'induction à l'intérieur des lignes de circonférences.

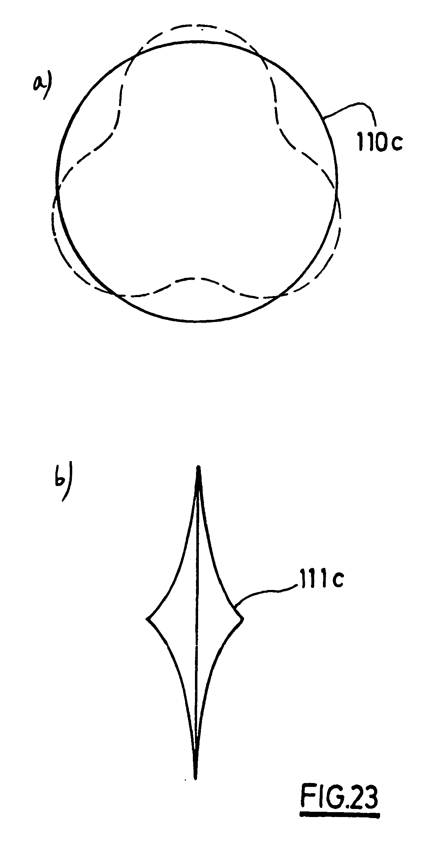

La figure 16 représente des formes convexes, 110e et 111c obtenues en plaçant le point de rattachement des pales, à l'extérieur des circonférences des engrenages d'induction. Le mouvement excède celui de la forme originalement obtenue, tout autant à l'extérieur qu'à l'intérieur.

La figure 17 montre un moteur dont l'induction, vers l'extérieur, est obtenue à partir d'un axe imbriqué à l'axe de support. En effet, est disposé sur le vilebrequin un engrenage externe d'entraînement 751, qui sera imbriqué à un engrenage de d'extériorisation 93, disposé rigidement sur un axe 94 monté rotativement en travers du corps du moteur et menant la puissance à l'extérieur.

## Revendications

1. Une machine comprenant un corps de machine dans lequel est disposé un cylindre (2, 39, 51) où est insérée, semi rotativement, une pale (4, 25), un maneton de soutien (20) installé rotativement dans le corps de machine, et pourvu à ses deux extrémités d'un axe d'engrenage d'induction (23), lesdits axes d'engrenage d'induction supportant rotativement des engrenages d'induction (17), lesdits engrenages d'induction, auxquels est rattachée la pale (4, 25) par l'intermédiaire de deux axes d'induction (22) montés de façon excentrique sur lesdits engrenages d'induction, étant couplés à un engrenage de support (16), ledit engrenage de support étant disposé rigidement dans la machine,
**caractérisée en ce que** le cylindre a une forme similaire à celle d'un huit, d'un trèfle ou d'un triangle.

2. Une machine selon la revendication 1 dans laquelle les engrenages d'induction (17) sont couplés à l'engrenage de support (16) de façon externe.

3. Une machine selon la revendication 1 dans laquelle les engrenages d'induction (17) sont couplés à l'engrenage de support (16) de façon interne.

4. Une machine, selon la revendication 2, dont les engrenages d'induction (17) sont d'un diamètre deux fois inférieur à celui de l'engrenage de support (16), la pale (25) étant de forme triangulaire et le cylindre (2) étant en forme de huit.

5. Une machine, selon la revendication 2, dont les engrenages d'induction (17) sont d'un diamètre trois fois inférieur à celui de l'engrenage de support (16), le cylindre (39) étant en forme de trèfle à trois feuilles.

6. Une machine, selon la revendication 3, dont les engrenages d'induction (17) sont trois fois plus petits que l'engrenage de support (16), la pale (4) produisant un mouvement quasi triangulaire, et le cylindre est de forme quasi triangulaire.

7. Une machine, selon l'une des revendications 1 à 6, comportant plusieurs systèmes d'explosion.

8. Une machine, selon l'une des revendications 1 à 7, dont les axes d'engrenage d'induction (23) sont reliés rigidement aux engrenages d'induction (17), et sont insérés rotativement dans les extrémités du maneton de soutien (20).

9. Une machine, selon l'une des revendications 1 à 8, dans laquelle les points de rattachement de la pale (4, 25) sur les engrenages d'induction (17) sont situés à l'intérieur des circonférences des engrenages d'induction.

10. Une machine, selon l'une des revendications 1 à 8, dans laquelle les points de rattachement de la pale (4, 25) sur les engrenages d'induction (17) sont situés à l'extérieur des circonférences des engrenages d'induction.

## Claims

1. A machine comprising a machine body in which is arranged a cylinder (2, 39, 51) into which a blade (4, 25) is inserted semi-rotatively, a support pin (20) installed to rotate in the machine body and fitted with an induction gear shaft (23) at both ends, said induction gear shafts supporting in rotation induction gears (17), said induction gears, to which the blade (4, 25) is attached through two induction shafts (22) mounted eccentrically on said induction gears, being coupled with a support gear (16), said support gear being rigidly arranged in the machine, **characterized in that** the shape of the cylinder is similar to a figure of an eight, a cloverleaf or a triangle.

2. A machine in accordance with claim 1 in which the induction gears (17) are coupled with the support gear (16) externally.

3. A machine in accordance with claim 1 in which the induction gears (17) are coupled with the support gear (16) internally.

4. A machine in accordance with claim 2 in which the induction gears (17) have a diameter twice as small as that of the support gear (16) while the blade (25) is triangular in shape and the cylinder (2) is in the form of a figure of an eight.

5. A machine in accordance with claim 2 in which the induction gears (17) have a diameter three times smaller than that of the support gear (16) while the cylinder (39) is in the shape of a three-leaf clover.

6. A machine in accordance with claim 3 in which the induction gears (17) have a diameter three times smaller than that of the support gear (16) while the blade (4) produces an almost triangular movement and the cylinder is almost triangular in shape.

7. A machine in accordance with one of the claims 1 to 6 comprising several explosion systems.

8. A machine in accordance with one of the claims 1 to 7 whose induction gear shafts (23) are connected rigidly to the induction gears (17) and are inserted to rotate in the ends of the support pin (20).

9. A machine in accordance with one of the claims 1 to 8 in which the attaching points of the blade (4, 25) to the induction gears (17) are situated inside the circumferences of the induction gears.

10. A machine in accordance with one of the claims 1 to 8 in which the attaching points of the blade (4, 25) to the induction gears (17) are situated outside the circumference of the induction gears.

## Patentansprüche

1. Maschine mit einem Maschinenkörper, in dem ein Zylinder (2, 39, 51) angeordnet ist, der halbdrehbar einen Flügel (4, 25) enthält, und einem Stützkurbelzapfen (20), der drehbar in dem Maschinenkörper montiert ist und an seinen beiden Enden eine Induktionsgetriebeachse (23) aufweist, wobei die genannten Induktionsgetriebeachsen drehbar Induktionsgetriebe (17) tragen, wobei die genannten Induktionsgetriebe, an denen der Flügel (4, 25) über zwei, exzentrisch an den genannten Induktionsgetrieben montierte Induktionsachsen (22) befestigt ist, mit einem Trägergetriebe (16) gekoppelt sind, wobei das genannte Trägergetriebe fest in der Maschine angeordnet ist,
**dadurch gekennzeichnet, dass** der Zylinder die Form einer Acht, eines Kleeblatts oder eines Dreiecks aufweist.

2. Maschine nach Anspruch 1, bei der die Induktionsgetriebe (17) extern mit dem Trägergetriebe (16) gekoppelt sind.

3. Maschine nach Anspruch 1, bei der die Induktionsgetriebe (17) intern mit dem Trägergetriebe (16) gekoppelt sind.

4. Maschine nach Anspruch 2, deren Induktionsgetriebe (17) einen zwei Mal kleineren Durchmesser aufweisen als das Trägergetriebe (16), wobei der Flügel (25) dreieckig ist und der Zylinder (2) die Form einer Acht aufweist.

5. Maschine nach Anspruch 2, deren Induktionsgetriebe (17) einen drei Mal kleineren Durchmesser aufweisen als das Trägergetriebe (16), wobei der Zylinder (39) die Form eines dreiblättrigen Kleeblatts aufweist.

6. Maschine nach Anspruch 3, deren Induktionsgetriebe (17) drei Mal kleiner sind als das Trägergetriebe (16), wobei der Flügel (4) eine quasi dreieckige Bewegung erzeugt und der Zylinder quasi dreieckig ist.

7. Maschine nach einem der Ansprüche 1 bis 6, die mehrere Explosionssysteme umfasst.

8. Maschine nach einem der Ansprüche 1 bis 7, deren Induktionsgetriebeachsen (23) fest mit den Induktionsgetrieben (17) verbunden und drehbar in den Enden der Stützkurbelzapfen (20) eingefügt sind.

9. Maschine nach einem der Ansprüche 1 bis 8, bei der sich die Befestigungspunkte des Flügels (4, 25) an den Induktionsgetrieben (17) innerhalb der Umfänge der Induktionsgetriebe befinden.

10. Maschine nach einem der Ansprüche 1 bis 8, bei der sich die Befestigungspunkte des Flügels (4, 25) an den Induktionsgetrieben (17) außerhalb der Umfänge der Induktionsgetriebe befinden.
